Europäisches Patentamt

European Patent Office

Office européen des brevets

(11) Veröffentlichungsnummer: **0 405 229 B1**

(12) **EUROPÄISCHE PATENTSCHRIFT**

(45) Veröffentlichungstag der Patentschrift: **27.12.95**

(51) Int. Cl.6: **G01N 27/22**, G01N 22/04

(21) Anmeldenummer: **90111154.2**

(22) Anmeldetag: **13.06.90**

(54) **Verfahren und eine Vorrichtung zur Messung des volumetrischen Wasseranteils mineralischer und/oder organischer Gemische**

(30) Priorität: **24.06.89 DE 3920787**

(43) Veröffentlichungstag der Anmeldung:
**02.01.91 Patentblatt 91/01**

(45) Bekanntmachung des Hinweises auf die
Patenterteilung:
**27.12.95 Patentblatt 95/52**

(84) Benannte Vertragsstaaten:
**AT BE CH DE FR GB IT LI NL**

(56) Entgegenhaltungen:
**WO-A-86/05278**
**DE-A- 3 402 708**
**US-A- 4 044 607**
**US-A- 4 540 936**

(73) Patentinhaber: **Forschungszentrum Karlsruhe GmbH**
**Weberstrasse 5**
**D-76133 Karlsruhe (DE)**

(72) Erfinder: **Brandelik, Alexander, Dr.**
**Guggelensberg 3**
**D-7500 Karlsruhe 41 (DE)**

(74) Vertreter: **Gottlob, Peter, Dipl. Ing.**
**Forschungszentrum Karlsruhe GmbH**
**Stabsabteilung**
**Patente und Lizenzen**
**Weberstrasse 5**
**D-76133 Karlsruhe (DE)**

## Beschreibung

Die Erfindung betrifft ein Verfahren und eine Vorrichtung zur Messung des volumetrischen Wasseranteils eines mineralischen und/oder organischen Gemisches nach den Oberbegriffen der Patentansprüche 1 und 4.

Meteorologische Modelle erfordern eine genaue Kenntnis des Wassergehalts im Boden, da der Energieaustausch zwischen Boden und Atmosphäre wegen der großen Wärmekapazität des Wassers gegenüber der Luft hauptsächlich durch Verdampfung und Kondensation von Wasser vermittelt wird. In der Hydrologie bildet die genaue Kenntnis des Wassergehalts die Planungsgrundlage. In der Landwirtschaft ist eine optimale Bewässerung ohne exakte Wasserbestimmung nicht möglich. Eine zu geringe Wassermenge führt zur Schädigung der Pflanzen, während eine zu starke Bewässerung ein Auswaschen der Nährstoffe verursacht. Bei Trocknungsprozessen bringt eine genaue Kenntnis des Wassergehaltes Kostenvorteile, da die Trocknungsvorgänge sehr energieintensiv sind.

In der Regel werden zur Feuchtebestimmung Sonden benutzt, bei denen die Dielektrizitätskonstante DK des Gemisches ermittelt wird.

Aus der WO-A-8605278 ist ein Verfahren und eine Vorrichtung der gattungsgemäßen Art bekannt.

In der DE 34 02 708 A1 und in der Betriebsanleitung des Geräts BF 610 der Firma Philipp Schenk GmbH Wien & Co. Kg, Jedleseer Straße 59, A-1210 Wien, Österreich, sind zwei Geräte zur Bodenfeuchtemessung beschrieben, die zur Messung in die Erde gesteckt werden. Sie verändern dabei die Bodendichte. Weil die Verdichtung mit der Verringerung des Luftanteils geschieht, kann das zusätzliche Wasser nur ein kleineres Volumen füllen. Dadurch wird die Messung ungenau. Diese Dichteveränderung bleibt auf eine sehr lange Zeit erhalten.

Die Messung wird nicht mehr repräsentativ für ein ungestörtes Volumen.

Aus den gemssenen DK-Werten kann der Wassergehalt nur über eine Eichkurve ermittelt werden, welche für jede Bodenart in umständlicher Weise im Labor erstellt werden muß. Dazu wird eine repräsentative Bodenprobe gezogen. Diese wird vollständig getrocknet. Dann wird mit verschiedenen definierten Wassergehalten die Eichkurve aufgenommen.

Der Erfindung liegt die Aufgabe zugrunde, ein Verfahren und eine Vorrichtung zur Bestimmung des volumetrischen Wasseranteils in mineralischen und/oder organischen Gemischen zu entwickeln, wobei die Meßungenauigkeiten der bisherigen Verfahren deutlich unterschritten werden und wobei die probenspezifische Eichung im Labor entfällt.

Diese Aufgabe wird durch die kennzeichnenden Merkmale der Patentansprüche 1 und 4 gelöst. Die übrigen Patentansprüche beschreiben vorteilhafte Ausgestaltungen von Verfahren und Vorrichtung.

Für drei- oder mehrkomponentige Gemische stellt der Erdboden einen guten Repräsentanten dar. Ein Teil des Meßvolumens ist der trockene Boden B; neben dem Wasseranteil W ist noch ein Teil Luft L vorhanden. $L + W + B = 1$.

Die DK dieses Gemisches, $\epsilon_{g1}$ setzt sich zusammen aus der mit B gewichtete DK des trockenen Bodens $\epsilon_B$, der mit W gewichteten DK des Wassers $\epsilon_W$, und der mit L gewichteten DK der Luft $\epsilon_L$ ($\epsilon_L = 1$).

$$\epsilon_{g1} = B \cdot \epsilon_B + W \cdot \epsilon_W + L \cdot \epsilon_L$$

Im allgemeinen sind in dieser Gleichung B, $\epsilon_B$ und W unbekannt. Ein Fehler der bisherigen Verfahren besteht darin, daß man $B \cdot \epsilon_B$ und $L \cdot \epsilon_L$ vernachlässigt. Dieser Fehler ist umso größer, je kleiner der Wasseranteil ist.

Viele Sondenhersteller empfehlen deshalb die Eichung der Sonde für das jeweilige Gemisch bei verschiedenen Wasseranteilen. Diese Eichung bedarf mehrerer sehr genauer Probenahmen (Gefahr der Verdichtung) und das Anwenden langdauernder Ausheizverfahren.

Wenn die Fläche der Sondenabdeckung etwa so groß wie die vertikale Projektionsfläche des Meßvolumens ist, verfälscht das von diesem Deckel abfließende Regenwasser das Meßergebnis. Die Anreicherung des Wassers in der Nähe der Sonde ist auch deshalb störend, weil das abfließende Wasser Kanäle zwischen Erde und Sondenwand auswäscht.

Der Fehler der Dichteänderung beim Setzen der Sonde wird erfindungsgemäß dadurch stark reduziert, daß die leicht in den Boden gedrückte Sonde mit ihrer Schneidkante den Bodenanteil, der vom Sondenkörper beansprucht wird, nach innen drückt. Von dort wird das Bodenmaterial mit Hilfe eines Erdbohrers herausgenommen. Danach wird die Sonde weiter in die Erde gedrückt. Anstelle des Drückens hat sich die Hammerwirkung einer Schlagbohrmaschine gut bewährt. Das mehrmalige Wiederholen des Drückens und Bohrens gewährleistet einen praktisch spaltfreien Kontakt zwischen Sonde und Erde, ohne Dichteänderung im Meßvolumen.

Der Fehler, der bei der Nichtbeachtung von B und $\epsilon_B$ entsteht, wird erfindungsgemäß dadurch vermieden, daß das Wasser im Meßvolumen durch Abkühlung ausgefroren wird; eine zweite Messung der DK des Gemisches $\epsilon_{g2}$ erfaßt das in Eis umgewandelte Wasser.

$$\epsilon_{g2} = B \cdot \epsilon_B + W \cdot \epsilon_E + L \cdot \epsilon_L$$

Darin ist $\epsilon_E$ = 3,05 die DK des Eises.

Bildet man die Differenz $\epsilon_{g1}$ - $\epsilon_{g2}$ fallen die Terme B $\cdot$ $\epsilon_B$ und L $\cdot$ $\epsilon_L$ heraus, und so kann man W ausrechnen:

$$W = \frac{\epsilon_{g1} - \epsilon_{g2}}{\epsilon_W - \epsilon_E}$$

Nach der zweiten Messung läßt man das Gemisch auftauen.

Bei diesem Verfahren braucht man nicht wie bisher üblich, eine Eichkurve zu ermitteln.

Wenn die Sonde an derselben Stelle bleibt, ändern sich B und $\epsilon_B$ nicht. Der Wasseranteil ändert sich nur mit gleichzeitiger entsprechender Änderung des Luftanteils.

In einer weiteren Messung wird die DK des Gemisches nach einer Änderung des Wasseranteils, W gemessen.

$$\epsilon_{g3} = B \cdot \epsilon_B + (W + \Delta W) \cdot \epsilon_W + (L - \Delta W) \cdot \epsilon_L$$

Die Änderung $\Delta W$ berechnet man aus der folgenden Formel:

$$\Delta W = \frac{\epsilon_{g3} - \epsilon_{g1}}{\epsilon_W - \epsilon_L}$$

Da $\epsilon_W$ temperaturabhängig ist, setzt man für $\epsilon_W$ in der ersten und dritten Messung die Werte ein, die den aktuellen Temperaturen entsprechen. Um diese Temperaturen zu kennen, sind in der Meßsonde Temperaturfühler in der Nähe der Meßelektroden eingebaut.

Beim Abkühlen nimmt $\epsilon_g$ ab. Es erreicht einen minimalen Wert $\epsilon_{g2}$. Das Erreichen dieses örtlichen Minimums in der $\epsilon_g$-Temperatur-Kurve zeigt, daß das Wasser im Meßvolumen ausgefroren ist.

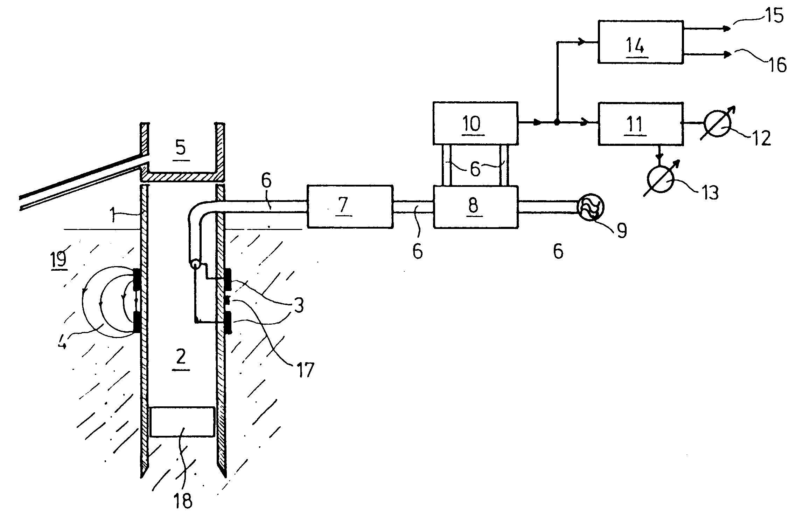

Ein Ausführungsbeispiel für die Erfindung ist in der Zeichnung dargestellt und wird im folgenden näher beschrieben.

Der Sondenkörper 1 besteht aus einem aus kältebeständigem Isoliermaterial (Glasfaser verstärkte Polyesterharz hat sich bewährt) geformten Hohlzylinder mit einer Schneidekante am unteren Ende und aus der Elektrodenanordnung 3. Die Elektrodenanordnung 3 kann als Zweileiter- oder als Dreileitersystem verwirklicht werden. Die Elektrodenanordnung 3 bildet hier einen Bandleiter. Dieser Hochfrequenzbandleiter wird ringsegmentförmig auf dem äußeren Zylindermantel angebracht. Die Empfindlichkeit der Sonde wird unwesentlich herabgesetzt, wenn man die Elektrodenanordnung 3 in den Sondenkörper zentrisch einbettet. Diese Einbettung gewährt eine besser Temperaturbeständigkeit.

Die von Hochfrequenzgenerator 9 erzeugte elektromagnetische Welle wird durch den bidirektionalen Richtkoppler 7 an die Elektrodenanordnung 3 geführt, dessen Strahlungsfeld 4 in das Meßgut eindringt. Die von der Elektrodenanordnung 3 reflektierte Welle hängt von der DK und der Leitfähigkeit des Gemisches ab.

Ein Vektorvoltmeter 10 mißt die reflektierte Welle. Von dem Betrag und der Phase der reflektierten Welle kann man die DK und Leitfähigkeit ausrechnen. Diese Rechnung kann das Rechenwerk 14 ausführen und das seinen Ausgängen 15 und 16 angeben. Diese Ausgänge können an ein Datenerfassungssystem angeschlossen werden.

Die Zuordnung der reflektierten Welle zu der DK und der Leitfähigkeit des Meßgutes kann man theoretisch berechnen. Um diese Zuordnung der realisierten Sonde genauer anzupassen, wird eine einzige sondenspezifische Eichmessungsserie durchgeführt. Mit bekannten Mischungen werden Phasen- und Betragsmessungen gemacht. Die fertigungsabhängigen Eingangsdaten der Zuordnungsrechnung werden so gewählt, daß die Eichmessungen mit den gerechneten Daten übereinstimmen. Diese Eingangsdaten werden im Rechenwerk 14 gespeichert.

Nach dem Setzen des Sondenkörpers im Meßgut wird ein dichtender Bodenverschluß 18 eingesetzt, um das flüssige Kühlmittel, meistens flüssigen Stickstoff, in dem Sondenhohlraum 2 auffangen zu können. Nach der Messung des ausgefrorenen Meßguts wird der Deckel 5 dicht an den Sondenkörper 1 gebracht. Der Kanal am Deckel 5 leitet das Regenwasser, das auf die Deckelfläche fällt, so weit ab, daß sein Einfluß auf das Meßfeld unwesentlich ist. Auf diese Weise trägt das Wasser, das vom Deckel abläuft, nicht zu einer Anreicherung im Meßvolumen bei.

Die Hochfrequenzkabel 6 führen die hochfrequenten Wellen.

Wenn man die Frequenz des Generators 9 so hoch wählt, daß die elektronische Güte des Meßguts Q

$$Q = \frac{\epsilon_g \cdot \omega}{\delta}$$

mit

$\omega$ = Kreisfrequenz des Generators

$\delta$ = Leitfähigkeit des Meßguts

höher wird als 3, dann beeinflußt die Leitfähigkeit die Phasenanzeige nur noch in vernachlässigbarem Maße. Dann ist eine einzige Eichkurve zwischen Phase und DK ausreichend um die oben beschriebene allgemeine Zuordnung zu ersetzen.

In diesem Fall kann die elektronische Schaltung 11 die Eichkurve speichern und an seinen Ausgängen die DK-Anzeige 12 und für die Kontrolle der Bedingung Q > 3 eine Anzeige 13 antreiben.

Die Eichkurve zwischen Phase und Dielektrizitätskonstante ist in der Regel nicht linear. Mit zunehmender DK ist der Phasenzuwachs kleiner. Wählt man die Länge der Elektrodenanordnung 3, bei der maximal erwarteten DK etwas kürzer als 1/4 der Wellenlänge, wird eine weitgehende Linearisierung der Eichkurve erreicht. Die Resonanzerhöhung des $\lambda/4$ Leiterresonators kompensiert die Nicht-Linearität ausreichend.

Der Temperaturfühler 17 mißt die aktuelle Temperatur um $\epsilon_w$ mit dem richtigen Wert einzusetzen.

Bezugszeichenliste

| | |
|---|---|
| 1 | Sondenkörper |
| 2 | Kühlmittelraum |
| 3 | Meßelektroden (Ringe) |
| 4 | Hochfrequenzfeld im Meßgut |
| 5 | Regenwasserableiter |
| 6 | Hochfrequenzkabel |
| 7 | Impedanzkorrektor |
| 8 | Bidirektionaler Richtkoppler |
| 9 | Hochfrequenzgenerator |
| 10 | Messung des Reflexionsfaktor |
| 11 | Durch Eichung zugeordnete Umwandlung des komplexen Reflexionsfaktors in Feuchte und in Leitfähigkeit |
| 12 | Anzeige für Feuchte |
| 13 | Anzeige für Leitfähigkeit |
| 14 | Rechner zur Umwandlung des komplexen Reflexionsfaktors in Feuchte und in Leitfähigkeit |
| 15 | Datenausgabe für Feuchte |
| 16 | Datenausgabe für Leitfähigkeit |
| 17 | Temperaturfühler |
| 18 | Bodenplatte |
| 19 | Gemisch |

**Patentansprüche**

1. Verfahren zur Bestimmung des volumetrischen Wasseranteils eines mineralischen und/oder organischen Gemisches innerhalb eines Meßvolumens mit dielektrischen Messungen mit Hilfe einer eine Meßelektrodenanordnung aufweisenden Sonde, wobei die Sonde in das Gemisch eingebracht und die Meßelektrodenanordnung mit einer hochfrequenten elektromagnetischen Welle beaufschlagt wird, so daß sich im Bereich der Meßelektrodenanordnung ein HF-Feld ausbildet und die zugehörige reflektierte Welle erfaßt wird, gekennzeichnet durch folgende Verfahrensschritte:

a) Einbringen der Meßsonde (1) in das Gemisch (19) derart, daß keine Gemischdichteänderung entsteht und daß die Sondenaußenwand dicht am Gemisch anliegt, wobei als Sondenkörper ein Hohlzylinder verwendet wird, welcher an seinem unteren Ende eine ringförmige Schneide aufweist, deren Schneidekante außen liegt und deren Schneideflächen einen Winkel von 10° bis 15° bilden,

b) Erfassen der reflektierten Welle mit Hilfe der Meßelektrodenanordnung (3) bei der aktuellen Gemischtemperatur $T_1$,

c) Abkühlen der Sonde (1) und des umliegenden Gemisches vorzugsweise mit flüssigem Stickstoff soweit, bis alles Wasser in einem Gemischvolumen, welches ca. 99% des HF-Feldes (4) umfaßt ausgefroren ist,

d) Messen der reflektierten Welle bei einer weiteren Gemischtemperatur $T_2$ im Bereich von -2° bis -20° C,

e) Ermitteln der Dielektrizitätskonstanten für das Gemisch bei den Temperaturen $T_1$ und $T_2$ aus den komplexen Reflexionsfaktoren mit Hilfe einer invarianten sondenspezifischen Eichkurve,

f) Berechnen des volumetrischen Wasseranteils des Gemisches (19) aus den beiden ermittelten Dielektrizitätskonstanten des Gemischs sowie aus den bekannten Dielektrizitätskonstanten von Wasser und Eis.

2. Verfahren nach Anspruch 1, dadurch gekennzeichnet, daß zur Ermittlung der Änderung des volumetrischen Wassergehalts lediglich eine weitere Messung des komplexen Reflexionsfaktors bei der aktuellen Gemischtemperatur durchgeführt wird, wobei die Position der Meßsonde gegenüber der ersten Messung unverändert sein muß, aus welchem die Dielektrizitätskonstante des Gemischs ermittelt und daraus zusammen mit den Dielektrizitätskonstanten des Gemisches, bei der Temperatur $T_1$ aus der früher durchgeführten Messung, des Wassers und der Luft die Änderung des Wassergehaltes bestimmt wird.

3. Verfahren nach Anspruch 1 oder 2, dadurch gekennzeichnet, daß die Messfrequenz so hoch gewählt wird, daß die elektrische Güte des Gemisches größer ist als 3, so daß zur Ermittlung der Dielektrizitätskonstanten des Gemisches allein Phasenmessungen durchgeführt werden.

4. Vorrichtung zur Bestimmung des volumentrischen Wasseranteils eines mineralischen und/oder organischen Gemisches innerhalb eines Meßvolumens mit dielektrischen Messungen, bestehend aus einem Sondenkörper welcher mindestens eine Elektrodenanordnung als 2- oder 3- Leitersystem trägt, wobei der Sondenkörper ein Hohlzylinder ist, dessen unteres Ende eine ringförmige Schneide aufweist, deren Schneidekante außen liegt, gekennzeichnet durch, ein bis -180° C temperaturbeständiges Isoliermaterial aus dem der Sondenkörper (1) besteht, einen Winkel von 10° bis 15° welchen die Schneideflächen der ringförmigen Schneide bilden, einen Temperaturfühler (17), eine Bodenplatte (18) und einen Deckel (5), wobei der Sondenkörper (1) an seinem unteren Ende kühlmitteldicht mit der Bodenplatte (18) verschlossen werden kann und dessen oberes Ende mit dem Deckel (5) verschließbar ist.

5. Vorrichtung nach Anspruch 4, dadurch gekennzeichnet, daß die Meßelektroden (3) direkt außen auf dem Sondenkörper (1) aufliegen.

6. Vorrichtung nach Anspruch 4, dadurch gekennzeichnet, daß die Meßelektroden (3) durch eine dünne Isolierschicht vom Gemisch (19) getrennt sind.

7. Vorrichtung nach Anspruch 4 oder einem der folgenden, dadurch gekennzeichnet, daß der Deckel (5) dicht und bündig auf dem Sondenkörper aufsitzt und daß er einen Ableitkanal aufweist.

8. Vorrichtung nach Anspruch 4 oder einem der folgenden, dadurch gekennzeichnet, daß die Länge der Meßelektrodenanordnung (3) nahe $\lambda/4$ der elektromagnetischen Welle ist.

9. Verwendung des Verfahrens nach Anspruch 1 oder einem der folgenden zur Bestimmung des volumetrischen Wassergehalts von Böden.

10. Verwendung der Vorrichtung nach Anspruch 4 oder einem der folgenden zur Bestimmung des volumetrischen Wassergehalts von Böden.

**Claims**

1. Method of determining the volumetric water content of a mineral and/or organic mixture within a measuring volume using dielectric measurements by means of a probe having a measuring electrode arrangement, whereby the probe is introduced into the mixture and the measuring electrode arrangement is impinged by a high-frequency electromagnetic wave so that a high-frequency field is formed in the region of the measuring electrode arrangement, and the associated reflected wave is detected, characterised by the following method steps:

a) introducing the measuring probe (1) into the mixture (19) in such a manner that there is no change in the mixture density and the external probe wall abuts tightly against the mixture, whereby a hollow cylinder is used as the probe body and has an annular cutter at its lower end, the cutting edge of said cutter lying externally and the cutting faces of said cutter forming an angle of between 10° and 15°,

b) detecting the reflected wave by means of the measuring electrode arrangement (3) at the actual mixture temperature $T_1$,

c) cooling the probe (1) and the surrounding mixture preferably with liquid nitrogen to such an extent until all the water in a mixture volume, which includes approx. 99% of the HF field (4), is frozen-out,

d) measuring the reflected wave at a further mixture temperature $T_2$ in the range of between -2° and -20° C,

e) determining the dielectric constant for the mixture at the temperatures $T_1$ and $T_2$ from the complex reflection factors by means of an invariant calibration curve specific to the probe,

f) calculating the volumetric water content of the mixture (19) from the two determined dielectric constants of the mixture and from the known dielectric constants of water and ice.

2. Method according to claim 1, characterised in that, in order to determine the change in the volumetric water content, only one additional measurement of the complex reflection factor at the actual mixture temperature is effected, whereby the position of the measuring probe relative to the first measurement must be unchanged, whence the dielectric constant of the mixture is determined and wherefrom the change in the water content is determined, together with the dielectric constants of the mixture, at the temperature $T_1$ from the earlier effected measurement, of the water and of the air.

3. Method according to claim 1 or 2, characterised in that the measuring frequency is selected to be so high that the electric quality of the mixture is greater than 3, so that only phase measurements are effected to determine the dielectric constant of the mixture.

4. Apparatus for determining the volumetric water content of a mineral and/or organic mixture within a measuring volume using dielectric measurements, comprising a probe body, which has at least one electrode arrangement as a 2- or 3-conductor system, the probe body being a hollow cylinder, the lower end of which has an annular cutter, the cutting edge of which lies externally, characterised by an insulating material, which is resistant to temperatures down to -180° C and from which the probe body (1) is formed, by an angle of between 10° and 15°, which the cutting faces of the annular cutter form, a temperature sensor (17), a base plate (18) and a cover (5), whereby the probe body (1) can be sealed at its lower end by the base plate (18) in a coolant-tight manner, and the upper end of said probe body is sealable by the cover (5).

5. Apparatus according to claim 4, characterised in that the measuring electrodes (3) lie directly externally on the probe body (1).

6. Apparatus according to claim 4, characterised in that the measuring electrodes (3) are separated from the mixture (19) by a thin insulating layer.

7. Apparatus according to claim 4 or one of the following claims, characterised in that the cover (5) lies tightly on the probe body and flush therewith, and in that it has a drainage channel.

8. Apparatus according to claim 4 or one of the following claims, characterised in that the length of the measuring electrode arrangement (3) is close to $\lambda/4$ of the electromagnetic wave.

9. Use of the method according to claim 1 or one of the following claims for determining the volumetric water content of soils.

10. Use of the apparatus according to claim 4 or one of the following claims for determining the volumetric water content of soils.

**Revendications**

1. Procédé de détermination de la teneur volumétrique en eau d'un mélange minéral et/ou organique dans un volume de mesure par des mesures diélectriques à l'aide d'une sonde présentant un dispositif d'électrode de mesure, où on place la sonde dans le mélange et on applique au dispositif d'électrode de mesure une onde électromagnétique à haute fréquence, de façon à former un champ HF dans le domaine du dispositif d'électrode de mesure, et il capte l'onde réfléchie correspondante, caractérisé par les étapes de procédé suivante :

a) insertion de la sonde de mesure (1) dans le mélange (19) de telle sorte qu'il ne se forme pas de modification de densité de mélange et que la paroi externe de sonde soit appliquée de manière étroite au mélange, où on utilise comme corps de sonde un cylindre creux, qui présente à son extrémité inférieure un bord coupant annulaire, dont le bord de coupe est tourné vers l'extérieur et dont les surfaces de coupe forment un angle de 10° à 15°,

b) saisie de l'onde réfléchie à l'aide du dispositif d'électrode de mesure (3) pour une température de mélange réelle $T_1$,

c) refroidissement de la sonde (1) et du mélange environnant de préférence avec de l'azote liquide, jusqu'à ce que toute l'eau présente dans un volume de mélange qui représente environ 99 % du champ HF (4) soit gelée,

d) mesure de l'onde réfléchie à une autre température de mélange $T_2$ dans l'intervalle de -2° à -20°C,

e) détermination de la constante diélectrique du mélange à des températures $T_1$ et $T_2$ à partir des facteurs complexes de réflexion à l'aide d'une courbe d'étalonnage invariable spécifique de la sonde,

f) calcul des teneurs en eau volumétrique du mélange (19) à partir des deux constantes diélectriques mesurées ainsi qu'à partir des constantes diélectriques connues du mélange de l'eau et de la glace.

2. Procédé selon la revendication 1, caractérisé en ce que la détermination de la modification de la teneur en eau volumétrique on réalise seulement une autre mesure du facteur de réflexion complexe pour la température réelle de mélange où il faut que la position de la sonde de mesure reste inchangée par rapport à la première mesure, ce qui permet de déterminer la constante diélectrique du mélange et on en déduit avec les constantes diélectriques du mélange d'eau et d'air, à la température $T_1$ de la mesure réalisée antérieurement, la modification de la teneur en eau.

3. Procédé selon la revendication 1 ou 2, caractérisé en ce qu'on choisit la fréquence de mesure suffisamment élevée pour que la qualité électrique du mélange soit supérieure à 3, de sorte que pour déterminer les constantes du mélange on réalise seulement des mesures de phase.

4. Procédé de détermination de la teneur en eau volumétrique d'un mélange minéral et/ou organique dans un volume de mesure avec des mesures diélectriques, constitué d'un corps de sonde qui porte au moins un dispositif d'électrode sous forme de système à 2 ou 3 conducteurs ou le corps de sonde est un cylindre creux dont l'extrémité inférieure présente un couteau annulaire, dont le bord coupant est dirigé vers l'extérieur, caractérisé en ce qu'il comprend un matériau isolant constituant le corps de sonde (1) résistant jusqu'à des températures de -180 °C, des faces coupantes du couteau annulaire qui forment entre elles un angle de 10 ° à 15 °, un capteur de température (17), une plaque de fond (18) et un couvercle (5), où le corps de sonde (1) est obturable à son extrémité inférieure de manière étanche au réfrigérant à l'aide de la plaque de fond (18) et son extrémité supérieure est obturable avec le couvercle (5).

5. Dispositif selon la revendication 4, caractérisé en ce que les électrodes de mesure (3) reposent directement sur le corps de sonde (1).

6. Dispositif selon la revendication 4, caractérisé en ce que les électrodes de mesure (3) sont séparées du mélange (19) par une couche mince isolante.

7. Dispositif selon la revendication 4 ou l'une des suivantes, caractérisé en ce que le couvercle (5) repose de manière précise et étanche sur le corps de sonde et qu'il présente un canal de dérivation.

8. Dispositif selon la revendication 4 ou l'une des suivantes, caractérisé en ce que la longueur du dispositif d'électrode de mesure (3) est proche de $\lambda/4$ de l'onde électromagnétique.

9. Utilisation du procédé selon la revendication I ou l'une des suivantes pour déterminer la teneur volumétrique en eau des sols.

10. Utilisation du dispositif selon la revendication 4 ou les suivantes pour déterminer la teneur volumétrique.